# EUROPÄISCHE PATENTSCHRIFT

(11) **EP 1 568 419 B1**
(45) Veröffentlichungstag und Bekanntmachung des Hinweises auf die Patenterteilung: **09.05.2007**
(21) Anmeldenummer: 05003733.2
(22) Anmeldetag: 22.02.2005
(51) Int. Cl.: B06B 1/04

(54) **Vibrator zum Beaufschlagen eines Gegenstandes in einer vorbestimmten Richtung und Vorrichtung zum Herstellen von Betonsteinen**
Vibrator for vibrating an item in a certain direction and device for manufacturing blocks of concrete
Vibrateur pour imposer des vibrations dans une cértaine diréction à des objéts et appareil pour faire des blocs de béton

(30) Priorität: 26.02.2004 DE 102004009251
(43) Veröffentlichungstag der Anmeldung: 31.08.2005
(73) Patentinhaber: HESS Maschinenfabrik GmbH. & Co. KG, D-57299 Burbach-Wahlbach (DE)
(72) Erfinder: Backs, Ulrich, 32689 Kalldof (DE)
(74) Vertreter: Sparing Röhl Henseler Patentanwälte European Patent Attorneys

(56) Entgegenhaltungen:
- EP-A- 1 116 524
- EP-A- 1 187 509
- FR-A- 2 715 424
- US-A- 3 173 664
- US-A- 5 936 516
- US-A- 5 959 939

## Beschreibung

Die Erfindung betrifft einen Vibrator zum Beaufschlagen eines Gegenstandes in einer vorbestimmten Richtung und eine Vorrichtung zum Herstellen von Betonsteinen durch rüttelnde Beaufschlagung eines Formwerkzeugs.

Bei der Herstellung von Betonsteinen ist es u.a. bekannt, ein Formwerkzeug zu verwenden, das während und/oder nach der Füllung mit erdfeuchtem Betonmörtel mittels Vibratoren gerüttelt wird, wobei die Vibratoren an den Seitenwänden des Formwerkzeugs angreifen. Hierbei werden als Vibratoren Unwuchterreger eingesetzt, die eine aufwendige und raumgreifende Konstruktion bedingen und bei hohen Rüttelfrequenzen stark verschleißanfällig sind. Vibratoren sind aus EP 1187509, US 5936516, FR 2715425 und US 3173664 bekannt.

Aufgabe der Erfindung ist es, einen Vibrator zum Beaufschlagen eines Gegenstandes in einer vorbestimmten Richtung zu schaffen, der eine kompakte, wenig verschleißanfällige Konstruktion aufweist.

Diese Aufgabe wird entsprechend den Merkmalen des Anspruchs 1 gelöst.

Dementsprechend ist ein Vibrator umfassend ein Gehäuse und zwei gleiche, darin spiegelsymmetrisch angeordnete, synchron angesteuerte, elektrische Linearmotorspulen vorgesehen, zwischen denen sich ein Anker befindet, der über eine entsprechende Ansteuerung der Linearmotorspulen in deren Längsrichtung hin- und her schwingbeweglich ist, wobei der Anker einen Träger und zwei gleiche Permanentmagnetplatten umfaßt, die an beiden Seiten des Trägers befestigt sind.

Weitere Ausgestaltungen der Erfindung sind der nachfolgenden Beschreibung und den Unteransprüchen zu entnehmen.

Die Erfindung wird nachstehend anhand von in den beigefügten Abbildungen dargestellten Ausführungsbeispielen näher erläutert.

Fig. 1 zeigt hälftig, schematisiert und teilweise aufgeschnitten in Seitenansicht eine Ausführungsform eines Vibrators.

Fig. 2 zeigt hälftig und teilweise im Schnitt eine Stirnansicht des Vibrators von Fig. 1.

Fig. 3 zeigt schematisch in Seitenansicht eine Befülleinrichtung für eine Betonsteinmaschine.

Fig. 4 und 5 zeigen schematisch in Vorderansicht bzw. in Draufsicht eine Verdichtungsstation für eine Betonsteinmaschine.

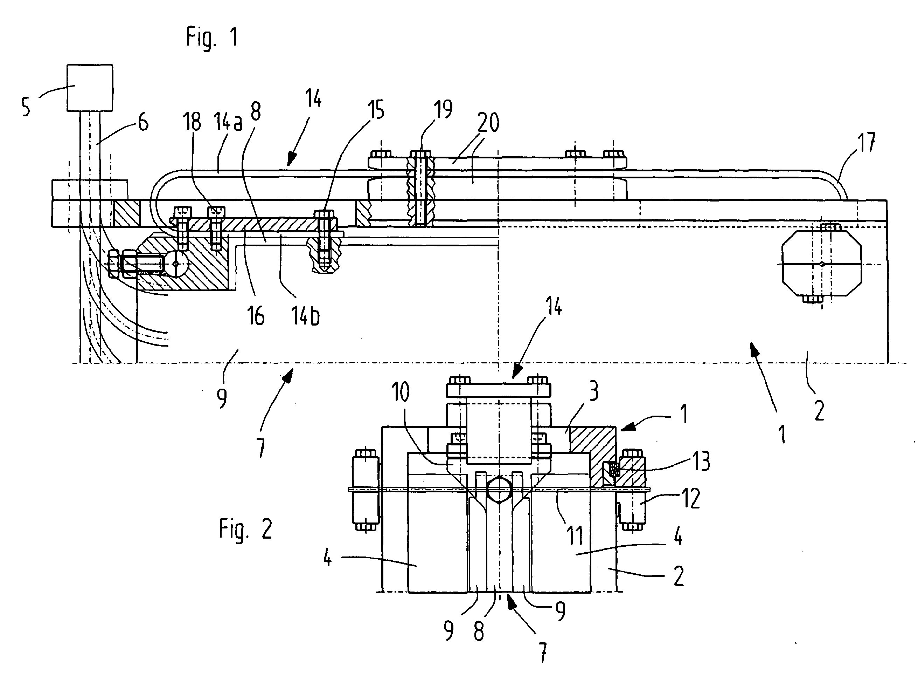

Die in den Fig. 1 und 2 dargestellte Ausführungsform eines Vibrators umfaßt ein im wesentlichen kastenförmiges Gehäuse 1 aus nicht magnetischem bzw. nicht magnetisierbarem Material wie einer Aluminiumlegierung mit Seitenwandungen 2, die über Wandungen 3 zu einem länglichen Kasten miteinander verbunden sind. An den Innenseiten der Seitenwandungen 2 befinden sich spiegelsymmetrisch zueinander angeordnet als Primärteile eines Linearmotors Linearmotorspulen 4, die synchron in Längsrichtung ihrer Anordnung über eine entsprechende Ansteuerung 5 und elektrische Zuleitungen 6 angesteuert und dementsprechend elektrisch beaufschlagt werden können, um einen zwischen den Linearmotorspulen 4 angeordneten, als Sekundärteil des Linearmotors dienenden Anker 7 hin und her schwingen zu lassen.

Der Anker 7 umfaßt einen Träger 8 aus einem nicht magnetischen bzw. magnetisierbaren Material wie beispielsweise eine Aluminiumlegierung, der auf beiden Seiten jeweils eine sich im wesentlichen über die Fläche der Linearmotorspulen 4 erstreckende, am Träger 8 befestigte permanentmagnetische Platte 9 aufweist, die aus einem Permanentmagneten bestehen oder aus einer Vielzahl von Permanentmagneten zusammengesetzt sein kann. Außerdem ist der Träger 8 an seinen gegenüberliegenden Längsseiten endseitig jeweils mit einem Befestigungsflansch 10 versehen.

Zwischen dem Anker 7 und den Linearmotorspulen 4 befindet sich ein schmaler Luftspalt von beispielsweise 0,5 mm. Um diesen aufrechtzuerhalten, d.h. den Anker 7 zentriert zwischen den Linearmotorspulen 4 während des Hin- und Herschwingens des Ankers 7 zu halten, wird beim dargestellten Ausführungsbeispiel der Anker 7 über mehrere Drähte 11 (insbesondere aus Federstahldraht) gehalten, die sich durch eine entsprechende Bohrungen im Anker 7 und in den Seitenwandungen 2 des Gehäuses 1 erstrecken und an der Außenseite der Seitenwandungen 2 in Klemmhülsen 12 unter Zwischenschaltung von Tellerfederpaketen 13 eingespannt sind. Diese Art der Aufhängung eignet sich insbesondere für kleine Hübe des Ankers 7 im Bereich weniger mm, bei denen eine Lagerung über Wälzkörper wegen der mangelnden Schmierung unvorteilhaft ist, und außerdem für relativ hohe Frequenzen von beispielsweise 30 bis 50 Hz für den Ankerhub. Eine Lagerung des Ankers 7 über Wälzkörper zum Führen des Ankers 7 gegenüber den Linearmotorspulen 4 wird erst zweckmäßig, wenn die Hübe des Ankers 7 mindestens etwa eine Wälzkörperumdrehung erreichen.

Am Anker 7 ist ferner zweckmäßigerweise beidseitig je eine sich in Bewegungsrichtung des Ankers 7 erstreckende, als Blattfeder ausgebildete Arbeitsfeder 14 befestigt, die in Form eines Bügels ausgebildet ist, der einen Mittelschenkel 14a und zwei hierzu parallele Schenkel 14b aufweist. Letztere sind an dem Träger 8 mittels Schrauben 15 befestigt und ferner mittels einer Klemmplatte 16 am Träger 8 benachbart zu dem gekrümmten Verbindungsabschnitt 17 zwischen dem Mittelschenkel 14a und dem jeweiligen Schenkel 14b eingeklemmt, wobei die Klemmplatte 16 mittels Schrauben 18 an dem Befestigungsflansch 10 befestigt ist. Auf diese Weise gehören die Schenkel 14b zum schwingenden Teil, während der Verbindungsabschnitt 17 und der Mittelschenkel 14a, der mittels Schrauben 19 und Klemmplatten 20 am Gehäuse 1 befestigt ist, zwei federnde Abschnitte bilden, die beim Hin- und Herschwingen des Ankers 7 jeweils entsprechend gespannt bzw. entspannt werden.

Dabei sind die Arbeitsfedern 14 zweckmäßigerweise derart abgestimmt, daß sie im Masse/Feder-System, das in Bewegungsrichtung des Ankers wirksam ist, bei Erreichen der gewünschten Hubamplitude alleine weiter schwingt und praktisch nur noch die Verlustenergie infolge Federverformung nachgeführt, dagegen nicht die ganze Beschleunigungsenergie über die Linearmotorspulen 4 erbracht werden muß.

Um den Energieaufwand und damit auch die Baugrößen der Bauteile der Linearmotoren klein zu halten, erfolgt beim Einschalten des Vibrators ein Aufschaukeln der Hubamplitude des Ankers 7, indem seitens der Linearmotorspulen 4 immer soviel Energie aufgebracht wird, daß bei jedem Hub zusätzlich zum Spannen der Arbeitsfedern 14 ein kleiner zusätzlicher Hub des Ankers 7 erfolgt, bis die gewünschte Hubamplitude erreicht ist.

Vibratoren der vorstehend beschriebenen Art sind vorteilhaft in einer Betonsteinmaschine einsetzbar.

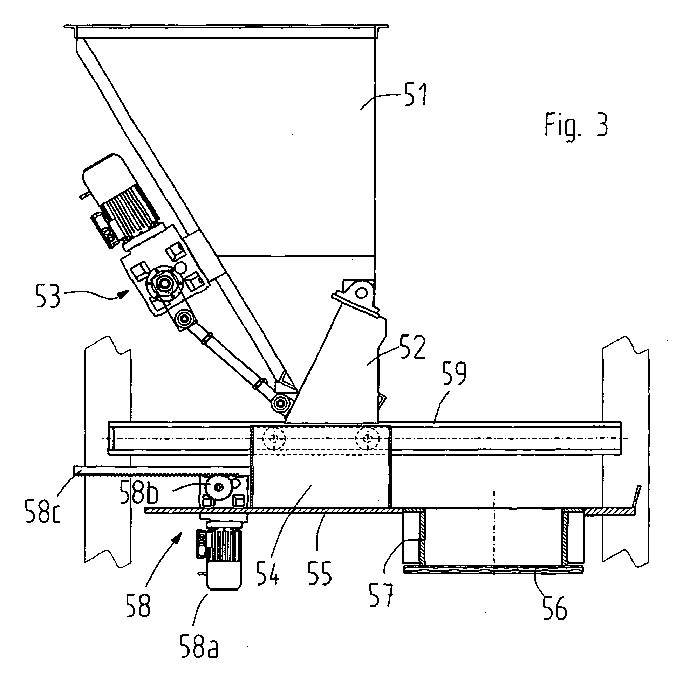

Letztere kann eine Befülleinrichtung aufweisen, wie sie in Fig. 3 dargestellt ist. Diese umfaßt einen Silo 51 mit einem trichterförmigem Auslauf und einer am Silo 51 angelenkten Klappe 52 (oder mit mehreren trichterförmigen, jeweils mit einer Klappe verschlossenen Ausläufen), die zwischen einer geöffneten und einer geschlossenen Position mittels eines ein an der Klappe 52 angreifendes Gestänge umfassenden Antriebs 53 beweglich ist. Unterhalb des Silos 51 befindet sich ein oben und unten offener Füllwagen 54, der über ein Tischblech 55 zwischen einer Stellung unter der Klappe 52 und einer Stellung über einem auf einer Fertigungsunterlage 56 befindlichen Formwerkzeug 57 für Betonsteine mittels eines Linearantriebs 58, beispielsweise bestehend aus einem am Füllwagen 54 angeordneten Elektromotor 58a und einem hiervon getriebenen Ritzel 58b, das mit einer zum Tischblech 55 parallelen Zahnstange 58c in Eingriff steht, oder aus einem Kolben/Zylinder-Antrieb oder einem Kurbeltrieb, verfahrbar ist. Der Füllwagen 54 wird dabei von einer vorzugsweise beidseitig des Füllwagens 54 angeordneten Horizontalführung 59 geführt.

Die Fertigungsunterlage 56 befindet sich über einem in vertikale Schwingungen versetzbaren Rütteltisch 60, der innerhalb eines Gestells 61 auf Dämpfungselemente 62 gelagert ist, so daß die vom Rütteltisch 60 ausgehenden Vibrationen praktisch nicht auf das Gestell 61 und die Fundamente übertragen werden. Während des Rüttelns schlägt der Rütteltisch 60 von unten vorzugsweise über Klopfleisten 60a gegen die Fertigungsunterlage 56, so daß diese auf- und unter Schwerkrafteinwirkung abbewegt wird.

Im Gestell 61 ist ein vertikal verfahrbarer Stempel 63 angeordnet, mit dem im Formwerkzeug 57 befindlicher Betonmörtel 64 verdichtet werden kann. Der Stempel 63 ist mittels wenigstens zweier, synchronisierter Motoren 65 (im dargestellten Ausführungsbeispiel vier derartiger Motoren 65) verfahrbar. Dies kann, wie beispielhaft dargestellt, über Ritzel 66 und Zahnstangen 67 erfolgen, die in jeder Richtung beweglich etwa über ein Kugelgelenk mit einer Auflast 68 verbunden sind, an deren Unterseite sich der Stempel 63 befindet.

Da sich eine unregelmäßige Befüllung hauptsächlich in Verfahrrichtung des Füllwagens 54 ergibt, sind, wenn nur zwei Motoren 65 verwendet werden, diese zweckmäßigerweise in Verfahrrichtung des Füllwagens 54 hintereinander anzuordnen. Dies beinhaltet aber auch, daß sie zur Verfahrrichtung versetzt sein können, etwa im wesentlichen auf die diagonal gegenüberliegenden Ecken des Formwerkzeugs 57 einwirken. Bei vier Motoren 65 entsprechend dem dargestellten Ausführungsbeispiel sind diese paarweise in Verfahrrichtung des Füllwagens 54 hintereinander angeordnet. Es lassen sich aber auch drei Motoren 65 verwenden, beispielsweise ein Motor 65, der auf die zuerst beim Befüllen vom Füllwagen 54 erreichte Seite des Formwerkzeugs 57 einwirkt, während die beiden anderen quer zur Verfahrrichtung benachbart angeordnet sind und im Bereich der zuletzt vom Füllwagen 54 erreichten Seite des Formwerkzeugs 57 einwirken.

Die Motoren 65 können elektrische oder hydraulische Motoren sein. Sie sind jeweils mit einem Drehmomentaufnehmer 69 gekoppelt, der zweckmäßigerweise im Falle einen elektrischen Motors 65 ein Stromaufnehmer und im Falle eines hydraulischen Motors 65 ein Druckaufnehmer ist. Die Drehmomentaufnehmer 69 sind mit einer Regelung 70 für den Antrieb des Füllwagens 54 gekoppelt. Hierdurch kann während der Produktion entsprechend der Differenz der Meßwerte der Drehmomentaufnehmer 69 zu einem vorbestimmten, die gewünschte Kraftaufnahme repräsentierenden Sollwert, der im allgemeinen für alle Motoren 65 gleich ist, die Befüllung durch Änderung der Verfahrgeschwindigkeit bzw. des Verfahrgeschwindigkeitsprofils des Füllwagens 54 während seiner Hin- und/oder Rückfahrt und/oder Änderung seines Verfahrweges (d.h. wieweit der Füllwagen 54 über das Formwerkzeug 57 bzw. über dieses hinweg fährt) derart verändert werden, daß sich immer eine im wesentlichen gleichmäßige Befüllung und damit eine praktisch gleichbleibende Produktqualität ergibt.

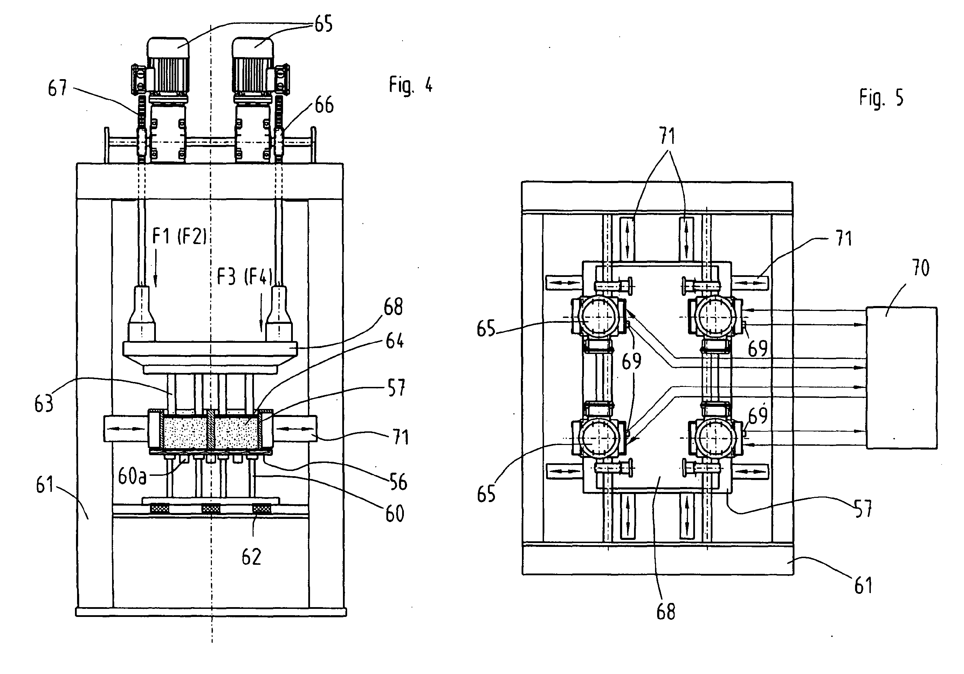

Dementsprechend kann, da bei jedem Befüll- und Verdichtungstakt gemessen wird, bei unterschiedlichen Drehmomenten (hervorgerufen durch unterschiedliche, auf den Stempel 63 einwirkende Kräfte F₁, F₂, F₃, F₄, vgl. Fig. 4) sofort eine Korrektur der Betonsteinhöhe vorgenommen werden.

An dem Formwerkzeug 57 greifen, wie in Fig. 5 dargestellt, gegebenenfalls auch ohne Verwendung des Rütteltischs 60 mindestens zwei erfindungsgemäße Vibratoren 71 paarweise kraftschlüssig an, um die Verdichtung des im Formwerkzeug 57 befindlichen erdfeuchten Betonmörtels durch seitliches Rütteln etwa mit einer Frequenz im Bereich von 30 bis 50 Hz und einer Amplitude von wenigen mm vorzunehmen. Im dargestellten Ausführungsbeispiel sind acht Vibratoren 71 am Umfang des Formwerkzeugs 57 verteilt (hier jeweils zwei in einem jeweiligen Eckbereich über Eck angeordnet) vorgesehen.

Die Verwendung der erfindungsgemäßen Vibratoren 71 ermöglicht nicht nur eine gute Verdichtung, sondern auch einen schnellen Wechsel des Formwerkzeugs 57, da die Vibratoren 71 infolge des kraftschlüssigen Angreifens in ihrer neutralen Ausgangsstellung oder gegebenenfalls auch in ihrer vom Formwerkzeug 57 zurückgezogenen Stellung Luft zum Formwerkzeug 57 lassen, so daß dieses in diesem Zustand ohne weiteres schnell entnommen und ausgewechselt werden kann.

Ferner erfolgt beim Verdichten mittels Vibration durch den Rütteltisch und/oder die Vibratoren 71 ein Elastizitätsausgleich der mechanischen Einrichtung, aber auch der zu formenden Betonsteine, indem der Antrieb durch denjenigen Motor 65, der der größeren Kraft bzw. dem größeren Drehmoment zugeordnet ist, synchron mit dem oder den anderen Motoren 65 läuft. Hierdurch wird vermieden, daß die Auflastseite des Stempels 63 im schlechter befüllten Bereich gegenüber dem gut befüllten Bereich durchsackt. Die Synchronisation der Motoren 65 erfolgt elektronisch etwa über eine entsprechende Wegmessung.

Die Vibratoren 71 können auch als Füllhilfe verwendet werden, indem sie während des Füllens des Formwerkzeugs 57 betrieben werden. Als Horizontalrüttler betrieben führen dabei die Vibratoren 71 dazu, daß die Formwandung des Formwerkzeugs 57 gegen den eingefüllten Betonmörtel 64 schlägt, wodurch die Seiten der hergestellten Betonsteine verbessert werden. Gleichzeitig kann durch Steuerung der von den Vibratoren 71 ausgeübten Kraft, deren Vibrationsamplitude und -frequenz die Befüllung verbessert und vergleichmäßigt werden.

## Patentansprüche

1. Vibrator zum durch Kraftschluss angreifenden Beaufschlagen eines Gegenstandes in einer vorbestimmten Richtung, umfassend ein Gehäuse und zwei gleiche, darin spiegelsymmetrisch angeordnete, synchron angesteuerte, elektrische Linearmotorspulen (4), zwischen denen sich ein Anker (7) befindet, der über eine entsprechende Ansteuerung (5) der Linearmotorspulen (4) in deren Längsrichtung hin- und her schwingbeweglich ist, wobei der Anker (7) einen Träger (8) umfasst, und zwischen den Linearmotorspulen (4) linear beweglich zentriert gelagert ist,
**dadurch gekennzeichnet, dass** zwei gleiche permanentmagnetische Platten (9) an beiden Seiten des Trägers (8) befestigt sind, und der Anker (7) über federvorgespannt im Gehäuse (1) quer zur Bewegungsrichtung des Ankers (7) angeordnete Drähte (11) gelagert ist.

2. Vibrator nach Anspruch 1, **dadurch gekennzeichnet, dass** die Drähte (11) endseitig unter Zwischenschaltung von Tellerfedern (13) in Klemmhülsen (12) eingeklemmt sind.

3. Vibrator nach Anspruch 1 oder 2, **dadurch gekennzeichnet, dass** der Anker (7) in beiden Hubrichtungen mittels wenigstens einer Arbeitsfeder (14) vorgespannt ist.

4. Vibrator nach Anspruch 3, **dadurch gekennzeichnet, dass** die wenigstens eine Arbeitsfeder (14) bügelartig ausgebildet und in Bewegungsrichtung des Ankers (7) angeordnet ist, wobei ihre zu einem Mittelschenkel (14a) im wesentlichen parallelen freien Schenkel (14b) am Anker und der Mittelschenkel (14a) am Gehäuse (1) befestigt sind.

5. Vibrator nach Anspruch 3 oder 4, **dadurch gekennzeichnet, dass** die wenigstens eine Arbeitsfeder (14) derart abgestimmt ist, dass sie im Masse/Feder-System, das in Bewegungsrichtung des Ankers wirksam ist, bei Erreichen einer gewünschten Hubamplitude im wesentlichen alleine weiter schwingt und praktisch nur noch die Verlustenergie infolge Federverformung nachzuführen ist.

6. Vibrator nach einem der Ansprüche 1 bis 5, zum Beaufschlagen einer Wandung eines Formwerkzeugs zum Verdichten eines körnigen Materials, insbesondere eines erdfeuchten Betonmörtels.

7. Vibrator nach einem der Ansprüche 1 bis 6, **dadurch gekennzeichnet, dass** in Bezug auf ausgeübte Kraft Vibrationsamplitude und -frequenz einstellbar sind.

8. Verwendung mindestens eines Vibrators nach einem der Ansprüche 1 bis 8, **dadurch gekennzeichnet, dass** zum horizontalen Rütteln eines Formwerkzeugs (57) zum Herstellen von Betonsteinen an gegenüberliegenden Seitenwandungen des Formwerkzeugs (57) wenigstens jeweils ein Vibrator (71) kraftschlüssig angreifend verwendet wird.

9. Verwendung nach Anspruch 8, **dadurch gekennzeichnet, dass** an allen Seitenwandungen des Formwerkzeugs (57) wenigstens ein Vibrator (71) angreifend verwendet wird.

10. Verwendung nach Anspruch 9, **dadurch gekennzeichnet, dass** jeweils zwei Vibratoren (71) in den Eckbereichen des Formwerkzeugs (57) angreifend verwendet werden.

11. Verwendung nach einem der Ansprüche 8 bis 10, **dadurch gekennzeichnet, dass** ein über das Formwerkzeug (57) verfahrbarer Füllwagen (54) vorgesehen ist, wobei die Vibratoren (71) während des Füllens betätigbar verwendet werden.

## Claims

1. Vibrator for acting by force transmission on an object in a predetermined direction, comprising a casing and two identical, synchronously driven, electric linear motor coils (4) arranged mirror-symmetrically therein, between which coils there is an armature (7) which can be moved to and fro in an oscillatory fashion by driving (5) the linear motor coils (4) appropriately in their longitudinal direction, the armature (7) comprising a carrier (8), and being mounted centred such that it can move linearly between the linear motor coils (4),
**characterized in that** two identical permanent magnetic plates (9) are fixed to both sides of the carrier (8), and the armature (7) is mounted via wires (11) arranged under spring prestress in the casing (1) transverse to the direction of movement of the armature (7).

2. Vibrator according to Claim 1, **characterized in that** the wires (11) are clamped in clamping sleeves (12) at the ends with the interposition of disc springs (13).

3. Vibrator according to Claims 1 or 2, **characterized in that** the armature (7) is prestressed in both stroke directions by means of at least one operating spring (14).

4. Vibrator according to Claim 3, **characterized in that** the at least one operating spring (14) is formed in the manner of a bow and is arranged in the direction of movement of the armature (7), its free limb (14b) substantially parallel to a central limb (14a) being fixed to the armature and the central limb (14a) being fixed to the casing (1).

5. Vibrator according to Claim 3 or 4, **characterized in that** the at least one operating spring (14) is coordinated in such a way that, in the mass/spring system which acts in the direction of movement of the armature, it continues to oscillate on its own when the desired stroke amplitude has been reached and virtually only the energy loss resulting from spring deformation has to be topped up.

6. Vibrator according to one of Claims 1 to 5, for acting on a wall of a mould for compacting a granular material, in particular a damp concrete mortar.

7. Vibrator according to one of Claims 1 to 6, **characterized in that** they can be adjusted in relation to the force exerted, vibration amplitude and frequency.

8. Use of at least one vibrator according to one of Claims 1 to 8 **characterized in that**, in order to vibrate a mould (57) horizontally for producing concrete blocks, at least one vibrator (71) is used in each case acting in a force-transmitting manner on opposite side walls of the mould (57).

9. Use according to Claim 8, **characterized in that** at least one vibrator (71) is used acting on all the side walls of the mould (57).

10. Use according to Claim 9, **characterized in that** in each case two vibrators (71) are used acting in the corner regions of the mould (57).

11. Use according to one of Claims 8 to 10, **characterized in that** a filling carriage (54) which can be moved above the mould (57) is provided, the vibrators (71) being used such that it is possible for them to be actuated during filling.

## Revendications

1. Vibrateur pour la sollicitation par coopération de forces d'un objet dans une direction prédéterminée, comportant un boîtier et deux bobines de moteur linéaire (4) électriques identiques pilotées de façon synchrone et agencées de façon symétrique dans ledit boîtier, entre lesquelles se trouve un induit (7) qui est mobile en oscillation en va-et-vient dans leur direction longitudinale via un pilotage correspondant (5) des bobines de moteur linéaire (4), l'induit (7) comprenant un support (8) et étant monté de façon centrée et linéairement mobile entre les bobines de moteur linéaire (4),
**caractérisé en ce que** deux plaques magnétiques permanentes (9) identiques sont fixées de part et d'autre du support (8), et **en ce que** l'induit (7) est monté par des fils (11) agencés sous précontrainte élastique dans le boîtier (1) transversalement à la direction de mouvement de l'induit (7).

2. Vibrateur selon la revendication 1, **caractérisé en ce que** les fils (11) sont serrés du côté extrémité dans des douilles de serrage (12) avec interposition de rondelles-ressorts (13).

3. Vibrateur selon la revendication 1 ou 2, **caractérisé en ce que** l'induit (7) est précontraint dans les deux directions de mouvement au moyen d'au moins un ressort de travail (14).

4. Vibrateur selon la revendication 3, **caractérisé en ce que** ledit au moins un ressort de travail (14) est réalisé en forme d'étrier et agencé dans la direction de déplacement de l'induit (7), ses branches libres (14b) sensiblement parallèles à une branche centrale (14a) étant fixées sur l'induit et la branche centrale (14a) étant fixée sur le boîtier (1).

5. Vibrateur selon la revendication 3 ou 4, **caractérisé en ce que** ledit au moins un ressort de travail (14) est ajusté de telle sorte que dans le système masse/ressort qui agit dans la direction de déplacement de l'induit, une fois qu'une amplitude de mouvement désirée est atteinte, il continue d'osciller sensiblement seul et qu'il suffit pratiquement de refournir l'énergie perdue en raison de la déformation du ressort.

6. Vibrateur selon l'une des revendications 1 à 5, destiné à solliciter une paroi d'un outil de façonnage pour comprimer un matériau en granulés, en particulier du mortier de béton à consistance de terre humide.

7. Vibrateur selon l'une des revendications 1 à 6, **caractérisé en ce que** l'amplitude et la fréquence de vibration sont réglables quant à la force exercée.

8. Utilisation d'au moins un vibrateur selon l'une des revendications 1 à 8, **caractérisée en ce que** pour la mise en secousses horizontales d'un outil de façonnage (57) destiné à réaliser des blocs en béton, on utilise au moins un vibrateur respectif (71) attaquant par coopération de forces des parois latérales opposées de l'outil de façonnage (57).

9. Utilisation selon la revendication 8, **caractérisée en ce que** l'on utilise au moins un vibrateur (71) attaquant toutes les parois latérales de l'outil de façonnage (57).

10. Utilisation selon la revendication 9, **caractérisée en ce que** l'on utilise deux vibrateurs respectifs (71) attaquant dans les zones de coin de l'outil de façonnage (57).

11. Utilisation selon l'une des revendications 8 à 10, **caractérisée en ce qu'**il est prévu un chariot de remplissage (54) déplaçable par-dessus l'outil de façonnage (57), les vibrateurs (71) étant utilisés de manière à pouvoir être actionnés pendant le remplissage.
